# EUROPÄISCHE PATENTSCHRIFT

(11) **EP 0 539 667 B1**
(45) Veröffentlichungstag und Bekanntmachung des Hinweises auf die Patenterteilung: **06.12.1995**
(21) Anmeldenummer: 92113161.1
(22) Anmeldetag: 01.08.1992
(51) Int. Cl.: B23Q 39/02

(54) **Werkzeugrevolver**
Tool turret
Tourelle porte-outil

(30) Priorität: 30.10.1991 DE 4135735
(43) Veröffentlichungstag der Anmeldung: 05.05.1993
(73) Patentinhaber: Sauter Feinmechanik GmbH, D-72545 Metzingen (DE)
(72) Erfinder: Thumm, Helmut, Dipl.-Ing. (FH), W-7430 Metzingen (DE)
(74) Vertreter: Patentanwälte Bartels und Partner

(56) Entgegenhaltungen:
- DE-A- 1 952 050

## Beschreibung

Die Erfindung betrifft einen Werkzeugrevolver, der die Merkmale des Oberbegriffs des Anspruches 1 aufweist.

Bei bekannten Werkzeugrevolvern mit zwei Revolverköpfen und je einem Antriebsmotor für diese ist die Länge, d.h. der Abstand der beiden Revolverköpfe und damit auch der Abstand der von ihnen getragenen Werkzeugscheiben relativ groß. Dies schränkt die Einsatzmöglichkeiten bei sogenannten Gegenspindelmaschinen stark ein.

Es sind zwar auch bereits Werkzeugrevolver mit mindestens zwei Revolverköpfen bekannt (DE-A-1 952 050), bei denen unabhängig davon, ob die Revolverköpfe gleichachsig nebeneinander an einer der Seiten des Revolvergehäuses, gleichachsig an einander gegenüberliegenden Seiten des Revolvergehäuses oder mit im rechten Winkel zueinander verlaufenden Drehachsen an zwei benachbarten Seiten des Revolvergehäuses angeordnet sind, die Revolverköpfe mittels eines einzigen Antriebsmotors einzeln oder gemeinsam in eine andere Drehstellung gebracht werden können. Die Ausführungsform mit gleichachsig nebeneinander angeordneten Revolverköpfen weist zwei unabhängig voneinander schaltbare Scheibenkupplungen auf, über die eine drehfest mit dem einen Revolverkopf verbundene Hohlwelle bzw. eine in dieser Hohlwelle angeordnete und mit dem anderen Revolverkopf drehfest verbundene Welle mit der parallel zu ihnen liegenden Motorwelle kuppelbar sind. Die Ausführungsform mit im rechten Winkel zueinander angeordneten Revolverköpfen weist eine gleichachsig zum Antriebsmotor im Gehäuse gelagerte, mittels einer Scheibenkupplung mit dem Antriebsmotor kuppelbare Welle, die drehfest mit dem einen Revolverkopf verbunden ist und ein Winkelgetriebe antreibt, sowie eine gleichachsig zum anderen Revolverkopf im Gehäuse gelagerte Welle auf, die vom Winkelgetriebe angetrieben und über eine Scheibenkupplung mit dem anderen Revolverkopf kuppelbar ist. Nachteilig ist bei allen diesen Werkzeugrevolvern nicht nur die aufwendige Konstruktion der Antriebsvorrichtung, sondern auch die Tatsache, daß Fehlschaltungen, die zu einer Drehbewegung aller Revolverköpfe führen, obwohl nur ein einziger Revolverkopf in Drehung versetzt werden soll, nicht ausgeschlossen sind.

Der Erfindung liegt daher die Aufgabe zugrunde, einen Werkzeugrevolver der eingangs genannten Art zu schaffen, bei dem trotz des beiden Revolverköpfen gemeinsamen Antriebsmotors und trotz des Fehlens einer Kontrolleinrichtung für die Antriebsvorrichtung eine Ansteuerung derselben nur zu einer Drehbewegung des einen oder nur des anderen Revolverkopfes führen kann, und die dennoch einen konstruktiv einfachen und platzsparenden Aufbau hat. Diese Aufgabe löst ein Werkzeugrevolver mit den Merkmalen des Anspruches 1.

Die in ständiger Getriebeverbindung mit dem Antriebsmotor stehende Antriebswelle, die je nach Bedarf aus ihrer Mittelstellung heraus in der sie mit keinem der beiden Revolverköpfe gekuppelt ist, in die eine oder andere Endstellung axial verschiebbar ist, in der sie mit dem einen bzw. anderen Revolverkopf gekuppelt ist, führt zu einem minimalen Platzbedarf zwischen den beiden Revolverköpfen und stellt außerdem sicher, daß jeweils nur einer der Revolverköpfe in eine Drehbewegung versetzt werden kann. Außerdem führt die erfindungsgemäße Bauart zu einer wesentlichen Reduzierung des Fertigungsaufwandes.

Die Antriebswelle kann geteilt ausgebildet sein, wobei beide Teile gemeinsam oder einzeln axial verschoben werden können. In der Regel wird aber eine ungeteilte Antriebswelle vorteilhafter sein.

Zur Minimierung der Herstellungskosten kann es ferner vorteilhaft sein, die beiden Revolverköpfe gleich auszubilden und symmetrisch bezüglich einer zwischen ihnen liegenden Mittelebene anzuordnen. Dasselbe gilt für eine Ausbildung des Revolvergehäuses derart, daß der zwischen den Revolverköpfen liegende Teil symmetrisch zu der Symmetrieebene der Revolverköpfe ausgebildet ist, wobei ohne Schwierigkeiten eine Teilung des Revolvergehäuses in dieser Symmetrieebene möglich ist, was aus Montagegründen erhebliche Vorteile bieten kann. Bei einer solchen symmetrischen Ausbildung des Werkzeugrevolvers ist vorteilhafterweise auch die Antriebswelle in ihrer Mittelstellung symmetrisch bezüglich der Symmetrieebene der Revolverköpfe angeordnet.

Vorteilhaft ist ferner sowohl hinsichtlich des Raumbedarfes als auch der Fertigungskosten ein Antrieb der Antriebswelle mittels eines hohlen Schneckenrades, das von der Antriebswelle durchdrungen wird und mit dem sie drehfest, aber axial verschiebbar verbunden ist. Dieses Schneckenrad und auch eine es antreibende Schnecke sind vorzugsweise ebenfalls in der Symmetrieebene im Revolvergehäuse drehbar gelagert.

Sieht man, wie dies bei einer bevorzugten Ausführungsform der Fall ist, vorgespannte Rückstellfedern vor, welche die Antriebswelle in deren Mittelstellung zu halten suchen, dann braucht der die Verschiebung der Antriebswelle bewirkende Kolben nur während der Zeit druckbeaufschlagt zu sein, innerhalb deren einer der Revolverköpfe in eine andere Drehstellung gebracht wird. Dies ist aus Kostengründen ebenfalls vorteilhaft, unabhängig davon, ob man nur einen Kolben vorsieht, welcher die Antriebswelle in beiden Richtungen verschieben kann, oder ob man zwischen der mit dem Antriebsmotor in Getriebeverbindung stehenden Mittelzone und den beiden Enden der Antriebswelle je einen nur einseitig beaufschlagbaren Kolben vorsieht.

Sofern die von den Revolverköpfen getragenen Werkzeugscheiben auch Aufnahmen für rotierende Werkzeuge aufweisen, ist bei einer bevorzugten Ausführungsform eine mit dem Antriebsmotor in ständiger Getriebeverbindung stehende zweite Antriebswelle vorgesehen, über die jeweils das sich in der Arbeitsposition befindende, drehbar gelagerte Werkzeug jeder der beiden Werkzeugscheiben antreibbar ist. Vorzugsweise erfolgt die Getriebeverbindung mit den drehbar gelagerten Werkzeugen am Übergang vom Revolvergehäuse zum Revolverkopf mittels je einer Kupplungseinrichtung, die in bekannter Weise ausgebildet sein kann.

Zweckmäßigerweise sind die Elemente der dem Antrieb der Werkzeuge dienenden Antriebsstränge in einem an das Revolvergehäuse angesetzten Getriebegehäuse gelagert. Es braucht dann nur dieses Getriebegehäuse an das Revolvergehäuse angesetzt zu werden, sofern wenigstens einer der beiden Revolverköpfe mit einer Werkzeugscheibe bestückt werden soll, die Aufnahmen für drehbare Werkzeuge aufweist. Dies trägt ebenfalls dazu bei, die Fertigungskosten gering zu halten.

Im folgenden ist die Erfindung anhand eines in der Zeichnung dargestellten Ausführungsbeispiels im einzelnen erläutert.

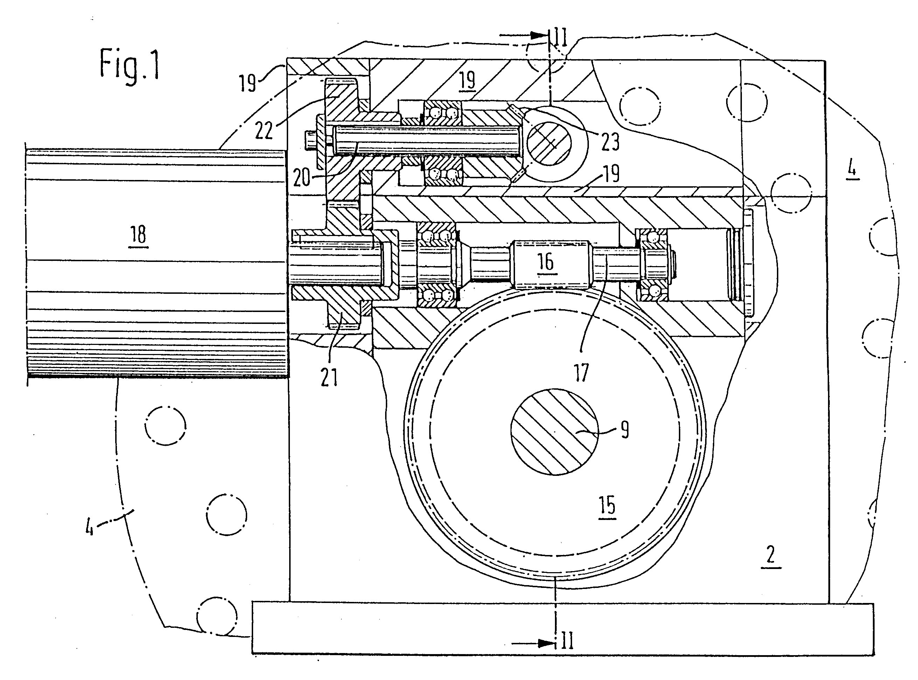

Es zeigen
- Fig. 1: einen schematisch dargestellten Schnitt in der Symmetrieebene des Werkzeugrevolvers,
- Fig. 2: einen unvollständig dargestellten Schnitt nach der Linie II-II der Fig. 1,

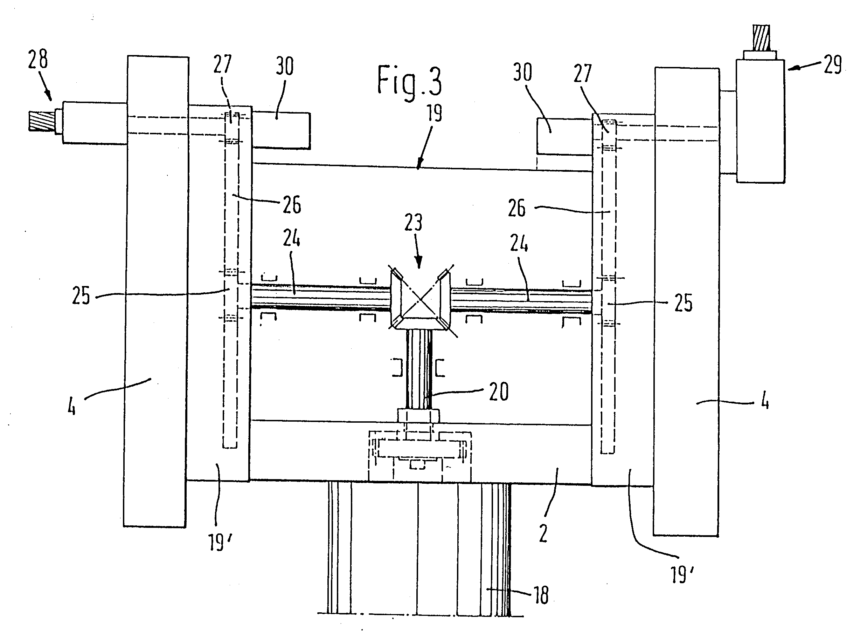

- Fig. 3: eine schematisch dargestellte Draufsicht des Ausführungsbeispiels.

Ein Zweischeiben-Werkzeugrevolver, auch Doppelrevolver genannt, weist ein mittig geteiltes und zu dieser Teilungsebene symmetrisch ausgebildetes Revolvergehäuse 2 auf, das wie die bekannten Werkzeugrevolver auf einen Kreuzschlitten oder dergleichen einer Werkzeugmaschine aufspannbar ist. Symmetrisch zur Teilungsebene und parallel zu dieser ist auf einander gegenüberliegenden Seiten des Revolvergehäuses 2 je ein Revolverkopf 3 angeordnet. Diese beiden im Ausführungsbeispiel gleich ausgebildeten Revolverköpfe 3 sind gleichachsig im Revolvergehäuse 2 drehbar gelagert und dabei so angeordnet, daß die der Anlage je einer Werkzeugscheibe 4 dienenden Stirnflächen einander abgekehrt sind.

Um die Revolverköpfe 3 in den wählbaren Winkelstellungen spielfrei und mit hoher Positionsgenauigkeit verriegeln zu können, sind zwei gleich ausgebildete Verriegelungseinrichtungen vorgesehen, die je ein ringförmiges, in Richtung der Drehachse der Revolverköpfe 3 verschiebbares Verriegelungsglied 5 aufweisen, das im Ausführungsbeispiel als Ringkolben ausgebildet ist. Die dem Revolverkopf 3 zugekehrte Stirnseite ist mit einer radialen Verzahnung 5' versehen, welche in der Verriegelungsstellung des Verriegelungsgliedes 5 gleichzeitig in zwei radiale Zahnkränze 6 und 7 eingreift, die am Revolverkopf 3 bzw. an einem fest mit dem Revolvergehäuse 2 verbundenen Ringkörper 8 vorgesehen sind. Die beiden Verriegelungsglieder 5 sind unabhängig voneinander mit einem Fluid, im Ausführungsbeispiel einer Hydraulikflüssigkeit, beaufschlagbar, um unabhängig voneinander die beiden Revolverköpfe 3 verriegeln und für eine Drehung in eine andere Winkelstellung freigeben zu können. Weitere Erläuterungen erübrigen sich, da Verriegelungseinrichtungen dieser Art an sich bekannt sind.

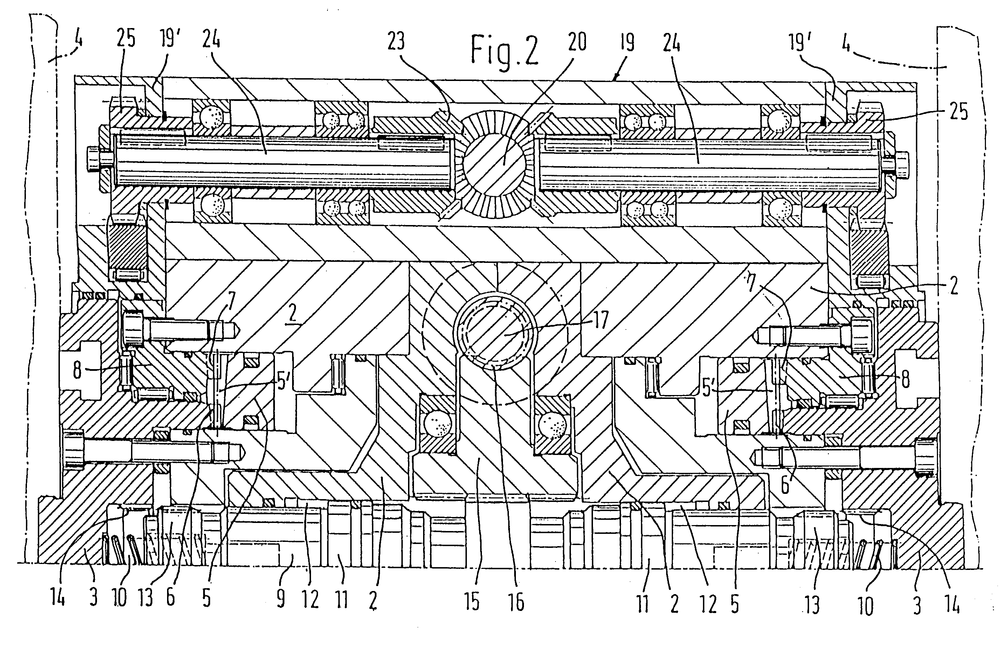

Für den Drehantrieb der beiden Revolverköpfe 3, wie er benötigt wird, wenn diese in eine andere Winkelstellung gedreht werden müssen, ist eine in der Drehachse der Revolverköpfe 3 liegende erste Antriebswelle 9 vorgesehen, die nicht nur drehbar, sondern auch längsverschiebbar, im Revolvergehäuse 2 gelagert ist. Im Ausführungsbeispiel ist diese erste Antriebswelle 9 einstückig ausgebildet. Sie könnte aber auch aus zwei vorzugsweise gleichen Teilen bestehen. Wie Fig. 2 zeigt, ist die erste Antriebswelle 9 symmetrisch zu ihrer Quermittelebene ausgebildet, welche in der Teilungsebene des Revolvergehäuses 2 liegt, wenn sich die erste Antriebswelle 9 in der Mitte ihres Verschiebbereiches befindet.

An beiden Enden der ersten Antriebswelle 9 ist konzentrisch zu dieser je eine vorgespannte Rückstellfeder 10 angeordnet, die sich einerseits am Revolverkopf 3 und andererseits an einem nicht dargestellten, in einer zentralen Sacklochbohrung der ersten Antriebswelle 9 vorgesehenen Federteller abstützt. Diese beiden Rückstellfedern 10 versuchen, die erste Antriebswelle 9 in der in Fig. 2 dargestellten Mittellage zu halten.

Jede der beiden gleich ausgebildeten Hälften der ersten Antriebswelle 9 trägt einen Kolben 11. Zwei im Revolvergehäuse 2 vorgesehene Zylinderräume 12 nehmen je einen der beiden Kolben 11 auf. Die Verschiebung der ersten Antriebswelle 9 nach rechts in einer Blickrichtung gemäß Fig. 2 wird durch eine Beaufschlagung des in der linken Hälfte dargestellten Kolbens 11 entgegen der in der rechten Hälfte dargestellten Rückstellfeder 10 bewirkt. Entsprechend läßt sich die erste Antriebswelle 9 nach links bei einer Blickrichtung gemäß Fig. 2 mit Hilfe des in der rechten Hälfte angeordneten Kolbens 11 entgegen der Kraft der in der linken Hälfte dargestellten Rückstellfeder 10 bewirken. Die beiden Kolben 11 brauchen deshalb nur einseitig beaufschlagt zu werden, weshalb ein nicht dargestelltes Drei-Stellungs-Ventil vorgesehen ist, das in seiner Mittelstellung die Druckmittelzufuhrleitungen zu beiden Zylinderräumen 12 sperrt und diese drucklos hält. In den beiden anderen Stellungen des Ventils ist der eine Zylinderraum 12 bzw. der andere Zylinderraum 12 mit der Druckmittelquelle verbunden.

Für die Herstellung einer drehfesten Verbindung zwischen der ersten Antriebswelle 9 und den beiden Revolverköpfen 3 trägt die erste Antriebswelle 9 im Bereich beider Enden je ein Ritzel 13. Die beiden Revolverköpfe 2 sind mit je einem eine korrespondierende Innenverzahnung aufweisenden Zahnring 14 versehen. Bei einer Längsverschiebung der ersten Antriebswelle 9 wird das eine oder andere Ritzel 13 in den einen bzw. anderen Zahnring 14 eingefahren.

Die Mittelzone der ersten Antriebswelle 9 befindet sich in der zentralen Bohrung eines Schneckenrades 15, das bezüglich der Teilungsebene des Revolvergehäuses 2 symmetrisch in diesem drehbar gelagert ist. Die zentrale Bohrung des Schneckenrades 5 ist mit einer Innenverzahnung oder mit Keilnuten versehen, in die eine Außenverzahnung der ersten Antriebswelle 9 oder die Rippen eines Keilwellenprofils eingreifen. Das Schneckenrad 15 ist deshalb drehfest mit der ersten Antriebswelle 9 verbunden. Letztere ist jedoch relativ zum Schneckenrad 15 in ihrer Längsrichtung verschiebbar. Mit dem Schneckenrad 15 kämmt eine Schnecke 16 einer Schneckenwelle 17, welche die erste Antriebswelle 9 rechtwinklig kreuzt und in der Teilungsebene des Revolvergehäuses 2 liegt. Diese Schneckenwelle 17 ist direkt mit einem Elektromotor 18 gekuppelt, der im Ausführungsbeispiel außen an das Revolvergehäuse 2 angeflanscht ist. Der Elektromotor 18, bei dem es sich im Ausführungsbeispiel um einen Drehstromasynchronmotor handelt, ist der einzige Antriebsmotor des Werkzeugrevolvers.

Parallel zur Schneckenwelle 17 und oberhalb derselben ist in einem Getriebegehäuse 19, das auf die Oberseite des Revolvergehäuses 2 aufgesetzt werden kann, eine zweite Antriebswelle 20 drehbar gelagert, die über zwei Zahnräder 21 und 22 von der Schneckenwelle 17 oder direkt von der Welle des Elektromotors 18 angetrieben wird. Die zweite Antriebswelle 20 steht über ein Winkelgetriebe 23 in Getriebeverbindung mit zwei gleichachsig im Getriebegehäuse 19 gelagerten Zwischenwellen 24, die parallel zum ersten Antriebswelle 9 oberhalb derselben liegen und an ihrem freien Ende je ein Ritzel 25 tragen. Diese beiden Ritzel 25 stehen in Eingriff mit je einem Zahnring 26. Diese beiden Zahnringe 26 sind in je einem ringförmigen Teil 19' des Getriebegehäuses 19 konzentrisch zur Drehachse des zugeordneten Revolverkopfes 3 drehbar gelagert.

Die beiden ringförmigen Teile 19' umfassen konzentrisch den zugeordneten Revolverkopf 3. An derjenigen Stelle des ringförmigen Teiles 19' des Getriebegehäuses 19, auf welche die Spindel eines in der Arbeitsposition stehenden, antreibbaren Werkzeuges 28 oder 29 ausgerichtet ist, ist an den beiden ringförmigen Teilen 19' je eine Kupplungseinrichtung 30 angeordnet, welche die Getriebeverbindung zwischen dem zugeordneten Zahnring 26 und der Werkzeugspindel herzustellen und zu trennen vermögen, wobei die Trennung am Übergang vom ringförmigen Teil 19' zur Werkzeugscheibe 4 erfolgt, damit diese bei getrennter Getriebeverbindung gedreht werden kann.

Jede der beiden gleich ausgebildeten Kupplungseinrichtungen 30 weist ein mit dem Zahnring 26 kämmendes Ritzel 27 und einen in Achsrichtung des Ritzels 27 verschiebbaren Kupplungsteil auf, der in seiner gegen die Werkzeugscheibe 4 vorgeschobenen Kupplungsstellung eine drehfeste Verbindung mit der Spindel des antreibbaren Werkzeuges 28 oder 29 herstellt. Die Verschiebung des Kupplungsteiles erfolgt im Ausführungsbeispiel mittels eines mit Fluid beaufschlagbaren Kolbens, könnte aber auch elektromagnetisch erfolgen. Die Kupplungseinrichtungen 30 sind an sich bekannt, weshalb sich eine weitergehende Erläuterung erübrigt.

Während eines der beiden antreibbaren Werkzeuge 28 oder 29 arbeitet, ist der Elektromotor 18 eingeschaltet. Die erste Antriebswelle 9 läuft in ihrer Mittelstellung stehend leer mit. Das andere antreibbare Werkzeug ist mittels der zugeordneten Kupplungseinrichtung 30 vom zugeordneten Antriebsstrang getrennt. Sobald der mit dem Werkzeug auszuführende Arbeitsvorgang beendet ist, wird der Elektromotor 18 abgeschaltet. Wird nun ein anderes Werkzeug benötigt, dann wird die Verriegelung desjenigen Revolverkopfes 3, der die dieses Werkzeug aufweisende Werkzeugscheibe 4 trägt, gelöst. Ferner wird die Antriebsverbindung mit dem zuvor angetriebenen Werkzeug mittels der Kupplungseinrichtung 30 gelöst. Nachdem außerdem die erste Antriebswelle 9 mit dem zugeordneten Revolverkopf 3 gekuppelt worden ist, wird der Elektromotor 18 eingeschaltet. Sobald der Revolverkopf 3 die neue Winkelposition erreicht hat, werden der Elektromotor 18 wieder abgeschaltet und die erste Antriebswelle 9 wieder in die Mittelstellung verschoben, wobei das dem Revolverkopf 3 zugeordnete Verriegelungsglied 5 in die Verriegelungsstellung gebracht und das jetzt in der Arbeitsposition stehende Werkzeug mittels der Kupplungseinrichtungen 30 mit dem Elektromotor 18 gekuppelt wird, sofern es sich um ein antreibbares Werkzeug handelt. Zum Schluß wird, wenn es sich um ein antreibbares Werkzeug handelt, der Elektromotor 18 wieder eingeschaltet.

Die vorstehende Beschreibung und die Zeichnung beschränken sich nur auf die Angabe von Merkmalen, die für die beispielsweise Verkörperung der Erfindung wesentlich sind.

## Patentansprüche

1. Werkzeugrevolver mit zwei gleichachsig auf einander gegenüberliegenden Seiten eines Revolvergehäuses (2) angeordneten Revolverköpfen (3), die unabhängig voneinander mittels einer Antriebsvorrichtung mit einem beiden Revolverköpfen (3) gemeinsamen Antriebsmotors (18) in auswählbare Drehstellungen drehbar und in diesen mittels je einer Verriegelungseinrichtung (5, 5', 6, 7) relativ zum Revolvergehäuse (2) unverdrehbar verriegelbar sind, dadurch gekennzeichnet, daß
a) die Antriebsvorrichtung der beiden Revolverköpfe (3) eine im Revolvergehäuse (2) gelagerte und mittels wenigstens eines zwischen den beiden Revolverköpfen (3) angeordneten Kolbens (11) längsverschiebbare Antriebswelle (9) aufweist, die von einer Mittelstellung, in der sie mit keinem der beiden Revolverköpfe (3) in Getriebeverbindung steht, wahlweise in die eine oder andere von zwei Endstellungen verschiebbar ist, in denen sie mit dem einen bzw. anderen Revolverkopf (3) in Getriebeverbindung steht, und
b) der Antriebsmotor (18) ständig mit der Antriebswelle (9) über ein Getriebe (15, 16) in Verbindung steht.

2. Werkzeugrevolver nach Anspruch 1, dadurch gekennzeichnet, daß die Antriebswelle im Abstand von ihren beiden Enden, vorzugsweise auf halber Länge, geteilt ist und jeder der beiden Teile ständig mit den gemeinsamen Antriebsmotor (18) in Verbindung steht.

3. Werkzeugrevolver nach Anspruch 1, dadurch gekennzeichnet, daß die Antriebswelle (9) ungeteilt ausgebildet ist.

4. Werkzeugrevolver nach einem der Ansprüche 1 bis 3, dadurch gekennzeichnet, daß die beiden Revolverköpfe (3) gleich ausgebildet und symmetrisch bezüglich einer zwischen ihnen liegenden Mittelebene eingeordnet sind.

5. Werkzeugrevolver nach Anspruch 4, dadurch gekennzeichnet, daß zumindest der zwischen den Revolverköpfen (3) liegende Teil des Revolvergehäuses (2) symmetrisch zur Symmetrieebene der Revolverköpfe (2) ausgebildet ist.

6. Werkzeugrevolver nach Anspruch 4 oder 5, dadurch gekennzeichnet, daß die Antriebswelle (9) symmetrisch zu ihrer Quermittelebene ausgebildet ist und in ihrer Mittelstellung symmetrisch bezüglich der Symmetrieebene der Revolverköpfe (3) angeordnet ist.

7. Werkzeugrevolver nach einem der Ansprüche 1 bis 6, gekennzeichnet durch ein hohles Schneckenrad (15), das den Mittelabschnitt der mit ihm drehfest, aber axial verschiebbar verbundenen Antriebswelle (9) umgibt, und eine vom Motor (18) antreibbare, mit dem Schneckenrad (15) in Eingriff stehende Schnecke (16).

8. Werkzeugrevolver nach Anspruch 7, dadurch gekennzeichnet, daß sowohl das Schneckenrad (15) als auch die Schnecke (16) in der Symmetrieebene der Revolverköpfe (3) im Revolvergehäuse (2) gelagert sind, das vorzugsweise in dieser Symmetrieebene geteilt ist.

9. Werkzeugrevolver nach einem der Ansprüche 1 bis 8, dadurch gekennzeichnet, daß der Antriebswelle (9) vorgespannte Rückstellfedern (10) zugeordnet sind, welche die Antriebswelle (9) in der Mittelstellung zu halten suchen.

10. Werkzeugrevolver nach einem der Ansprüche 1 bis 9, dadurch gekennzeichnet, daß die Antriebswelle (9) zwischen ihrer mit dem Antriebsmotor (18) in Getriebeverbindung stehende Mittelzone und den beiden Enden je einen einseitig beaufschlagbaren Kolben (11) trägt und diese beiden Kolben (11) sich in je einem im Revolvergehäuse (2) vorgesehenen Zylinderraum (12) befinden.

11. Werkzeugrevolver nach einem der Ansprüche 1 bis 10, gekennzeichnet durch eine mit dem Antriebsmotor (18) in ständiger Getriebeverbindung stehende zweite Antriebswelle (20), über die jeweils das sich in der Arbeitsposition befindende, drehbar gelagerte Werkzeug (28, 29) jeder der beiden von den Revolverköpfen (3) getragenen Werkzeugscheiben (4) antreibbar ist.

12. Werkzeugrevolver nach Anspruch 11, gekennzeichnet durch je eine Kupplungseinrichtung (30) in den von der zweiten Antriebswelle (20) zu den Werkzeugscheiben (4) führenden Getriebesträngen.

13. Werkzeugrevolver nach Anspruch 11 oder 12, dadurch gekennzeichnet, daß die zweite Antriebswelle (20) über je ein Winkelgetriebe (23) mit zwei gleichachsig zueinander und parallel zu den Drehachsen der Revolverköpfe (3) angeordneten Zwischenwellen (24) gekuppelt ist, die je ein Ritzel (25) tragen, das mit je einem ringförmigen, zur Drehachse der Revolverköpfe (2) konzentrischen Zahnrad (26) kämmen, mittels deren die Wellen der sich in der Arbeitsposition befindenden Werkzeuge (28, 29) antreibbar sind.

14. Werkzeugrevolver nach einem der Ansprüche 11 bis 13, dadurch gekennzeichnet, daß die zweite Antriebswelle (20) und die von ihr zu den beiden Revolverköpfen (2) führenden Antriebsstränge (23-27) in einem an das Revolvergehäuse (2) angesetzten Getriebegehäuse (19, 19') gelagert sind.

## Claims

1. Tool turret with two turret heads (3) arranged coaxially on opposite sides of a turret housing (2), which turret heads can be rotated independently of each other into preselectable rotary positions by means of a driving device with a drive motor (18) common to both turret heads (3) and which can be non-rotatably locked in these positions relative to the turret housing (2) in each case by means of a locking device (5, 5', 6, 7), characterised in that
a) the driving device of the two turret heads (3) comprises a drive shaft (9) mounted in the turret housing (2) and which is longitudinally displaceable by means of at least one piston (11) located between the two turret heads (3), which drive shaft can be moved from a central position, in which it is in geared connection with neither of the two turret heads (3), optionally into one or other of two end positions, in which it is in geared connection with one or other turret head (3), and
b) the drive motor (18) is permanently connected to the drive shaft (9) by way of gearing (15, 16).

2. Tool turret according to Claim 1, characterised in that at a distance from its two ends, preferably half way along its length, the drive shaft is divided and each of the two parts is permanently connected to the common drive motor (18).

3. Tool turret according to Claim 1, characterised in that the drive shaft (9) has an undivided construction.

4. Tool turret according to one of Claims 1 to 3, characterised in that the two turret heads (3) have an identical construction and are arranged symmetrically with respect to a central plane lying between them.

5. Tool turret according to Claim 4, characterised in that at least the part of the turret housing (2) located between the turret heads (3) is constructed symmetrically with respect to the plane of symmetry of the turret heads (3).

6. Tool turret according to Claim 4 or 5, characterised in that the drive shaft (9) is constructed symmetrically with repect to its transverse central plane and in its central position is located symmetrically with respect to the plane of symmetry of the turret heads (3).

7. Tool turret according to one of Claims 1 to 6, characterised by a hollow worm wheel (15), which surrounds the central section of the drive shaft (9) connected thereto so that it is non-rotatable but axially displaceable and a worm (16) able to be driven by the motor (18) and meshing with the worm wheel (15).

8. Tool turret according to Claim 7, characterised in that both the worm wheel (15) as well as the worm (16) are mounted in the plane of symmetry of the turret heads (3) in the turret housing (2), which is preferably divided in this plane of symmetry.

9. Tool turret according to one of Claims 1 to 8, characterised in that associated with the drive shaft (9) are pre-tensioned return springs (10), which attempt to hold the drive shaft (9) in the central position.

10. Tool turret according to one of Claims 1 to 9, characterised in that between its central area in geared connection with the drive motor (18) and the two ends, the drive shaft (9) in each case supports a piston (11) able to be acted upon at one side and these two pistons (11) are each located in a cylinder chamber (12) provided in the turret housing (2).

11. Tool turret according to one of Claims 1 to 10, characterised by a second drive shaft (20) in permanent geared connection with the drive motor (18), by which second drive shaft (20) the tool (28, 29) located in the working position and which is mounted to rotate, of each of the two tool discs (4) supported by the turret heads (3), can be driven.

12. Tool turret according to Claim 11, characterised respectively by a clutch device (30) in the transmission lines leading from the second drive shaft (20) to the tool discs (4).

13. Tool turret according to Claim 11 or 12, characterised in that the second drive shaft (20) is connected by way of respectively one miter gear (23) to two intermediate shafts (24) arranged coaxially with respect to each other and parallel to the axes of rotation of the turret heads (3), which intermediate shafts (24) each support a pinion (25), which each mesh with an annular gear (26) concentric to the axis of rotation of the turret heads (2), by means of which gear (26) the shafts of the tools (28, 29) located in the working position can be driven.

14. Tool turret according to one of Claims 11 to 13, characterised in that the second drive shaft (20) and the drive lines (23-27) leading from it to the two turret heads (2) are mounted in a gear case (19, 19') attached to the turret housing (2).

## Revendications

1. Tourelle porte-outil portant deux têtes de tourelle (3) disposées sur les faces opposées d'un carter (2) de la tourelle, lesdites têtes de tourelle pouvant être tournées, indépendamment l'une par rapport çà l'autre, par le moyen d'un dispositif d'entraînement comprenant un moteur d'entraînement (18) commun pour les deux têtes de tourelle (3) pour être mises dans des positions de rotation sélectionnables et verrouillées dans ces positions de rotation par le moyen d'un dispositif de verrouillage (5, 5', 6, 7) selon un mouvement relatif par rapport au carter (2) de la tourelle de manière à être bloquées dans le sens de la rotation, caractérisée en ce que :
a) le dispositif d'entraînement des deux têtes de tourelle (3) comprend un arbre d'entraînement (9) logé dans le carter (2) de la tourelle et pouvant être déplacé dans le sens longitudinal par au moins un piston (11) disposé entre les deux têtes de tourelle (3), ledit arbre d'entraînement pouvant être déplacé, a partir d'une position centrale dans laquelle il n'est accouplé à aucune des deux têtes de tourelle (3) par l'engrenage, soit dans l'une, soit dans l'autre des deux positions finales dans lesquelles il est accouplé, par un engrenage, à l'une ou a l'autre des deux têtes de tourelle (3) et en ce que
b) le moteur d'entraînement (18) est accouplé en permanence à l'arbre d'entraînement (9) par un engrenage (15, 16).

2. Tourelle porte-outil selon la revendication 1, caractérisée en ce que l'arbre d'entraînement est divisé à un écartement donné de ses deux extrémités, de préférence à la moitié de sa longueur, et que chacune de ces deux parties est accouplée en permanence à un moteur d'entraînement (18) commun.

3. Tourelle porte-outil selon la revendication 1, caractérisée en ce que l'arbre d'entraînement (9) est réalisé en une seule partie.

4. Tourelle porte-outil selon l'une quelconque des revendications 1 à 3, caractérisée en ce que les deux têtes de tourelle (3) sont réalisées sous une forme identique et disposées de manière symétrique par rapport à un plan central situé entre elles.

5. Tourelle porte-outil selon la revendication 4, caractérisée en ce qu'au moins la partie du carter (2) de la tourelle située entre les têtes de tourelle (3) est réalisée sous une forme symétrique par rapport au plan de symétrie des deux têtes de tourelle (3).

6. Tourelle porte-outil selon l'une quelconque des revendications 4 ou 5, caractérisée en ce que l'arbre d'entraînement (9) est réalisé sous une forme symétrique par rapport à son plan central transversal et qu'il est disposé, en position centrale, de manière symétrique par rapport au plan de symétrie des têtes de tourelle (3).

7. Tourelle porte-outil selon l'une quelconque des revendications 1 à 6, caractérisée par une roue tangente creuse (15) entourant la partie centrale de l'arbre d'entraînement (9) reliée à ladite roue tangente de manière solidaire dans le sens rotatif mais mobile dans le sens axial, ainsi que par une vis sans fin (16) pouvant être entraînée par le moteur (18) et introduite dans la denture de la roue tangente (15).

8. Tourelle porte-outil selon la revendication 7, caractérisée en ce que la roue tangente (15), d'une part, et la vis sans fin (16), d'autre part, sont disposées sur le plan de symétrie des têtes de tourelle (3) à l'intérieur du carter (2) de la tourelle, ledit carter étant, de préférence, divisé au niveau de ce plan de symétrie.

9. Tourelle porte-outil selon l'une quelconque des revendications 1 à 8, caractérisée en ce que des ressorts de rappel (10) précontraints sont associés à l'arbre d'entraînement (9), lesdits ressorts ayant tendance à maintenir l'arbre d'entraînement (9) dans sa position centrale.

10. Tourelle porte-outil selon l'une quelconque des revendications 1 à 9, caractérisée en ce que l'arbre d'entraînement (9) porte, entre sa zone centrale accouplée à un moteur d'entraînement (18) par un engrenage et ses deux extrémités, un piston (11) pouvant être mis sous pression individuellement et en ce que chacun de ces deux pistons (11) est introduit dans un cylindre (12) aménagé dans le carter (2) de la tourelle.

11. Tourelle porte-outil selon l'une quelconque des revendications 1 à 10, caractérisée par un deuxième arbre d'entraînement (20) accouplé en permanence au moteur (18) par un engrenage, ledit deuxième arbre d'entraînement permettant d'entraîner l'outil (28, 29) rotatif en position de travail porté par l'une des deux plaques porte-outil (4) portées par les têtes de tourelle (3).

12. Tourelle porte-outil selon la revendication 11, caractérisée par un dispositif d'accouplement (30) monté dans les groupes d'entraînement reliant le deuxième arbre d'entraînement (20) et les plaques porte-outil (4).

13. Tourelle porte-outil selon l'une quelconque des revendications 11 ou 12, caractérisée en ce que le deuxième arbre d'entraînement (20) est accouplé, par un engrenage conique (23), à deux arbres intermédiaires (24) disposés de manière coaxiale l'un par rapport à l'autre et parallèlement par rapport aux axes de rotation des têtes de tourelle (3) et portant chacun un pignon (25) introduit dans une roue dentée annulaire (26) disposée de manière concentrique par rapport à l'axe de rotation des têtes de tourelle (3) de manière à pouvoir entraîner les arbres des outils (28, 29) en position de travail.

14. Tourelle porte-outil selon l'une quelconque des revendications 11 à 13, caractérisée en ce que le deuxième arbre d'entraînement (20) et les groupes d'entraînement (23 à 27) reliant le deuxième arbre d'entraînement et les deux têtes de tourelle (2) sont logés dans un carter d'engrenage (19, 19') rapporté au carter (2) de la tourelle.
